# EUROPEAN PATENT APPLICATION

(11) **EP 4 821 780 A1**
(43) Date of publication of application: **14.10.2026**
(21) Application number: 24899783.5
(22) Date of filing: 02.12.2024
(51) Int. Cl.: B60W 50/02, B60W 50/00, B60W 30/09

(54) **VEHICLE CONTROL APPARATUS AND VEHICLE**

(30) Priority: 07.12.2023 CN 202311679670
(71) Applicant: Yinwang Intelligent Technologies Co., Ltd., Shenzhen, Guangdong 518110 (CN)
(72) Inventor: WANG, Kuanglei, Shenzhen, Guangdong 518129 (CN); SHEN, Weifeng, Shenzhen, Guangdong 518129 (CN)
(74) Representative: Gill Jennings & Every LLP
(86) International application number: PCT/CN2024/136205
(87) International publication number: WO 2025/119144

(57) **Abstract**

A vehicle control apparatus (300) and a vehicle (100) are provided, and are applied to the field of intelligent driving technologies. The vehicle control apparatus (300) includes a processing unit and a control unit. In a normal state, the processing unit may generate two types of control information based on surrounding environment information of the vehicle (100). One type of control information is main control information, used to control the vehicle (100) to travel normally. The other type of control information is a safety escape trajectory, used to control the vehicle (100) to pull over to a safe location. The processing unit sends both types of control information to the control unit, and the control unit may select, based on health status of the processing unit, which type of control information is used to control the vehicle (100). When the processing unit is normal, the control unit may control, based on the main control information, the vehicle (100) to travel normally. When the processing unit is abnormal, the control unit may control, based on the safety escape trajectory, the vehicle (100) to pull over to the safe location, thereby enabling safety control of the vehicle (100) when the processing unit is abnormal.

## Description

This application claims priority to Chinese Patent Application No. 202311679670.6, filed with the China National Intellectual Property Administration on December 7, 2023, and entitled "VEHICLE CONTROL APPARATUS AND VEHICLE", which is incorporated herein by reference in its entirety.

### TECHNICAL FIELD

This application relates to vehicle control technologies and is applied to the field of intelligent driving, and in particular, to a vehicle control apparatus and a vehicle.

### BACKGROUND

An intelligent driving vehicle usually needs to be equipped with a plurality of sensors (for example, cameras, lidars, and ultrasonic radars). Analysis of some sensor data needs to be completed through an artificial intelligence (artificial intelligence, AI) neural network. However, AI neural networks require high computational power, and a higher level of the intelligent driving vehicle indicates more road condition information that needs to be analyzed and processed, and a heavier computing load on the AI neural network. A conventional central processing unit (central processing unit, CPU) cannot handle such a huge amount of AI neural network inference computation. In addition, when traveling in an open environment, the intelligent driving vehicle may encounter various harsh weather conditions, electromagnetic interference, and other factors, which imposes high requirements on reliability of a computing platform of an intelligent driving system. According to safety standards of the automotive industry, the computing platform needs to meet corresponding automotive safety integrity level (automotive safety integrity level, ASIL) requirements.

Currently, the computing platform of the intelligent driving system is equipped with two heterogeneous chips. One chip has high computing performance and is responsible for intelligent driving-related computing, for example, image processing, AI model inference, and route planning. The other chip has high safety performance, may have relatively weak computing performance, but has a high ASIL level, and is responsible for outputting vehicle control instructions.

However, in existing solutions, if the chip responsible for intelligent driving-related computing is abnormal and cannot perform normal computing, the computing platform cannot normally output the vehicle control instruction, which may lead to safety accidents.

### SUMMARY

This application provides a vehicle control apparatus and a vehicle, to implement vehicle safety control in an abnormal situation.

According to a first aspect, this application provides a vehicle control apparatus. The vehicle control apparatus includes a processing unit and a control unit.

The processing unit is configured to: generate main control information and a safety escape trajectory based on environment information collected by a sensing apparatus, and send the main control information and the safety escape trajectory to the control unit.

The control unit is configured to: when the processing unit is normal, control the vehicle based on the main control information; and when the processing unit is abnormal, control the vehicle based on the safety escape trajectory.

Optionally, the vehicle control apparatus is used in a vehicle. The vehicle control apparatus may be an electronic device, or may be a processor, a chip (system), or a circuit used in the electronic device. This is not limited in this application.

In the foregoing solution, the vehicle control apparatus includes the processing unit and the control unit. In a normal state, the processing unit may generate two types of control information based on surrounding environment information of the vehicle. One type of control information is main control information, used to control the vehicle to travel normally. The other type of control information is a safety escape trajectory, used to control the vehicle to pull over to a safe location. The processing unit sends both types of control information to the control unit, and the control unit may select, based on health status of the processing unit, a specific type of control information used to control the vehicle. When the processing unit is normal, the control unit may control, based on the main control information, the vehicle to travel normally. When the processing unit is abnormal, the control unit may control, based on the safety escape trajectory, the vehicle to pull over to a safe location.

According to the foregoing solution, in a normal state, in addition to generating the main control information used to control the vehicle to travel normally, the processing unit further generates the safety escape trajectory used to control the vehicle to pull over to the safe location, and sends both the main control information and the safety escape trajectory to the control unit. When the processing unit is abnormal and cannot continue to provide the main control information, the control unit may control, based on the safety escape trajectory, the vehicle to pull over to the safe location, so that safety control of the vehicle can be implemented when the processing unit is abnormal. In addition, compared with performing a redundancy design on the processing unit to handle abnormal situations, the solution of this application does not require a redundant processing unit. This helps reduce costs of implementing vehicle safety control when the processing unit is abnormal.

In a possible implementation, that the processing unit is abnormal includes: The processing unit completely fails, or the processing unit partially fails.

That the processing unit completely fails may be that all functions of the processing unit fail, and therefore information used to control the vehicle cannot continue to be provided. That the processing unit partially fails may be that some functions of the processing unit fail, and the other functions do not fail, and therefore some information used to control the vehicle can continue to be provided.

In the foregoing implementation, a situation in which the processing unit is abnormal is subdivided into two situations: a situation in which the processing unit completely fails and a situation in which the processing unit partially fails, so that in each situation, corresponding control information may be used to perform corresponding control on the vehicle. This helps improve vehicle control reliability.

In a possible implementation, the control unit is further configured to: obtain first trajectory correction information based on the environment information collected by the sensing apparatus; and when the processing unit is abnormal, control the vehicle based on the safety escape trajectory and the first trajectory correction information, where the first trajectory correction information is used to correct the safety escape trajectory.

The first trajectory correction information may be auxiliary control information generated by the control unit based on the environment information collected by the sensing apparatus. The first trajectory correction information may reflect a surrounding environment of the vehicle, and may be used to correct the safety escape trajectory, so that the first trajectory correction information may be used to assist in vehicle control.

In the foregoing implementation, when the processing unit is abnormal, the control unit may obtain the first trajectory correction information based on the environment information collected by the sensing apparatus. In this way, perception of the surrounding environment of the vehicle can be maintained. The control unit may further control the vehicle based on the safety escape trajectory and the first trajectory correction information, so that in a process in which the vehicle pulls over to a safe location based on the safety escape trajectory, the first trajectory correction information may be used to assist in vehicle control, thereby helping further improve safety.

In another possible implementation, the processing unit is further configured to: when the processing unit partially fails, obtain second trajectory correction information based on the environment information collected by the sensing apparatus, and send the second trajectory correction information to the control unit. The control unit is further configured to control the vehicle based on the safety escape trajectory and the second trajectory correction information, where the second trajectory correction information is used to correct the safety escape trajectory.

The second trajectory correction information may be auxiliary control information generated by normal components (that is, some components that do not fail) in the processing unit based on the environment information collected by the sensing apparatus, or may be auxiliary control information obtained by the processing unit by using remaining computational power. The second trajectory correction information may reflect the surrounding environment of the vehicle, and may be used to correct the safety escape trajectory, so that the second trajectory correction information may be used to assist in vehicle control.

In the foregoing implementation, when the processing unit partially fails, the processing unit may process, by using the remaining computational power, the environment information collected by the sensing apparatus, to obtain the second trajectory correction information. In this way, perception of the surrounding environment of the vehicle can be maintained, the processing unit can be fully utilized, and a waste of computational power can be reduced. The control unit may control the vehicle based on the safety escape trajectory and the second trajectory correction information, so that in a process in which the vehicle pulls over to a safe location based on the safety escape trajectory, the second trajectory correction information may be used to assist in vehicle control, thereby helping further improve safety.

In still another possible implementation, the control unit is further configured to obtain the first trajectory correction information based on the environment information collected by the sensing apparatus. The processing unit is further configured to: when the processing unit partially fails, obtain second trajectory correction information based on the environment information collected by the sensing apparatus, and send the second trajectory correction information to the control unit. The control unit is further configured to control the vehicle based on the safety escape trajectory, the first trajectory correction information, and the second trajectory correction information, where the first trajectory correction information and the second trajectory correction information are used to correct the safety escape trajectory.

In the foregoing implementation, when the processing unit partially fails, the control unit may obtain the first trajectory correction information based on the environment information collected by the sensing apparatus, and the processing unit may process, by using the remaining computational power, the environment information collected by the sensing apparatus, to obtain the second trajectory correction information. In this way, perception of the surrounding environment of the vehicle can be maintained, and more abundant trajectory correction information is obtained, so that the processing unit can be fully utilized, and a waste of computational power can be reduced. The control unit may control the vehicle based on the safety escape trajectory, the first trajectory correction information, and the second trajectory correction information, so that in a process in which the vehicle pulls over to the safe location based on the safety escape trajectory, the first trajectory correction information, and the second trajectory correction information may be used to assist in vehicle control, thereby helping further improve safety.

In a possible implementation, the first trajectory correction information includes obstacle information and/or spatial perception information.

An obstacle may include a static obstacle (for example, a building, a traffic sign, or an overpass) and a dynamic obstacle (for example, a pedestrian or another vehicle). The obstacle information may include information such as a location and a speed of the obstacle, and may be used to reflect an obstacle condition around the vehicle. The spatial perception information may be related information of surrounding space of the vehicle, and may be used to reflect situations like road boundaries or drivable areas.

In the foregoing implementation, the first trajectory correction information includes the obstacle information and/or the spatial perception information. The obstacle information and/or the spatial perception information can accurately reflect a surrounding environment status of the vehicle, and is used to correct the safety escape trajectory, so that traveling safety of the vehicle in an abnormal situation can be further improved.

In a possible implementation, the second trajectory correction information includes an environment perception result.

The environment perception result may be a result obtained by the processing unit by using the remaining computational power to process the environment information collected by the sensing apparatus. For example, the environment perception result may include information such as the location and the speed of the obstacle. For another example, the environment perception result may include information like a road boundary or a drivable area.

In the foregoing implementation, the second trajectory correction information includes the environment perception result, and the environment perception result can accurately reflect a surrounding environment status of the vehicle, and is used to correct the safety escape trajectory, so that traveling safety of the vehicle in an abnormal situation can be further improved.

In a possible implementation, the safety escape trajectory includes a first safety escape trajectory and/or a second safety escape trajectory. The first safety escape trajectory indicates the vehicle to stop in a current lane, and the second safety escape trajectory indicates the vehicle to pull over to a roadside. When the safety escape trajectory includes the first safety escape trajectory and the second safety escape trajectory, the control unit is further configured to select a target escape trajectory from the first safety escape trajectory and the second safety escape trajectory.

The first safety escape trajectory may be control information used to control the vehicle to pull over to a safe location in the current lane, and the second safety escape trajectory may be control information used to control the vehicle to pull over to a safe location at the roadside.

In the foregoing implementation, the safety escape trajectory includes the first safety escape trajectory and/or the second safety escape trajectory. When the processing unit is abnormal, the control unit may control the vehicle to stop in the current lane based on the first safety escape trajectory, or pull over to the roadside based on the second safety escape trajectory. In this way, a plurality of solutions for dealing with an abnormal situation are provided, to help ensure that the vehicle can safely stop in the abnormal situation.

In a possible implementation, the processing unit is further configured to: predict next-moment environment information based on current environment information, determine a first parking location based on the next-moment environment information, and perform trajectory planning to obtain the first safety escape trajectory. The first parking location is a location, in the current lane, at which there is no obstacle and at which the vehicle can arrive within first duration.

The first parking location may be a safe location at which the vehicle can stop in the current lane. The first duration may be maximum duration allowed for the vehicle to stop in the current lane in the abnormal situation. In other words, the vehicle needs to complete stopping in the current lane within the first duration after the abnormal situation occurs.

In the foregoing implementation, the processing unit may determine, based on the surrounding environment information of the vehicle, the safe location at which the vehicle can stop in the current lane, and plan the first safety escape trajectory. Therefore, in an abnormal situation, the control unit may control the vehicle to stop in the current lane based on the first safety escape trajectory, so that the vehicle reaches a safe state.

In a possible implementation, the processing unit is further configured to: predict next-moment environment information based on current environment information, determine a second parking location based on the next-moment environment information, and perform trajectory planning to obtain the second safety escape trajectory. The second parking location is a location, at the roadside, at which there is no obstacle and at which the vehicle can arrive within second duration.

The second parking location may be a safe roadside location to which the vehicle can pull over. The second duration may be maximum duration allowed for the vehicle to pull over to the roadside in an abnormal situation. In other words, the vehicle needs to complete pulling over within the second duration after the abnormal situation occurs.

In the foregoing implementation, the processing unit may determine, based on the surrounding environment information of the vehicle, the safe location at which the vehicle can pull over to the roadside, and plan the second safety escape trajectory. Therefore, in an abnormal situation, the control unit may control the vehicle to pull over to the roadside based on the second safety escape trajectory, so that the vehicle reaches a safe state.

In a possible implementation, when the target escape trajectory is selected from the first safety escape trajectory and the second safety escape trajectory, the control unit is configured to: preferentially control, based on the second safety escape trajectory, the vehicle to pull over to the roadside, and predict pull-over duration; and when it is predicted that the pull-over duration exceeds the second duration, control the vehicle to stop in the current lane.

If the pull-over duration exceeds the second duration, it may be considered that the pull-over duration exceeds a safety range, and it may be considered that it is unsafe for the vehicle to continue to pull over. Therefore, the control unit may adjust a vehicle control solution, so that the vehicle stops in the current lane, to prevent potential safety problems that may occur when the vehicle continues to pull over.

In the foregoing implementation, when the safety escape trajectory includes the first safety escape trajectory and the second safety escape trajectory, the control unit controls the vehicle to preferentially pull over to the roadside based on the second safety escape trajectory. In this way, impact on other vehicles in the lane can be reduced. In a process in which the vehicle pulls over to the roadside based on the second safety escape trajectory, the control unit may further predict pull-over duration. When it is predicted that the pull-over duration exceeds the safe range, a vehicle control solution may be adjusted in time, so that the vehicle stops in the current lane, to ensure that the vehicle can stop safely.

In a possible implementation, the control unit is further configured to: when the main control information sent by the processing unit is not received within a first time threshold, determine that the processing unit is abnormal.

When the processing unit is normal, the processing unit may send the main control information to the control unit at a specific interval. Correspondingly, the control unit may receive the main control information from the processing unit at a specific interval. The first time threshold may be a maximum time interval between two consecutive times of sending the main control information by the processing unit, or a maximum time interval between two consecutive times of receiving the main control information by the control unit. When the control unit does not receive the main control information from the processing unit within the first time threshold, it may be determined that the processing unit is abnormal.

In the foregoing implementation, the control unit may determine the health status of the processing unit based on a receiving status of the main control information. When the control unit does not receive the main control information from the processing unit within the first time threshold, it may be considered that the processing unit does not normally send the main control information, and therefore it may be determined that the processing unit is abnormal.

In another possible implementation, the processing unit is further configured to report the health information to the control unit. The control unit is further configured to: when the health information includes abnormal information, determine that the processing unit is abnormal.

The processing unit may detect the health status of the processing unit, and report the health information to the control unit. Correspondingly, the control unit may receive the health information from the processing unit, where the health information may indicate the health status of the processing unit. When the health information includes abnormal information, it may be determined that the processing unit is abnormal.

In the foregoing implementation, the processing unit may actively report the health information to the control unit, and the control unit may determine the health status of the processing unit based on the health information reported by the processing unit. When the health information includes abnormal information, it may be considered that the processing unit detects an abnormal situation of the processing unit, and therefore it may be determined that the processing unit is abnormal.

In still another possible implementation, the control unit is further configured to send first information to the processing unit. The processing unit is further configured to send, to the control unit, second information in response to the first information. The control unit is further configured to: when the second information is not received within a second time threshold, determine that the processing unit is abnormal.

There is a question answering mechanism between the control unit and the processing unit. The control unit may send the first information to the processing unit at a specific interval. Correspondingly, the processing unit may receive the first information from the control unit at a specific interval. When the processing unit is normal, the processing unit may respond to the first information received each time and feed back the second information. Correspondingly, the control unit may receive the second information from the processing unit at a specific interval.

The second time threshold may be a maximum time interval from a moment at which the control unit sends the first information to a moment at which the processing unit feeds back the second information. When the control unit does not receive the second information from the processing unit within the second time threshold after sending the first information, it may be determined that the processing unit is abnormal.

In the foregoing implementation, the control unit may send the first information to the processing unit, and determine the health status of the processing unit based on a receiving status of the second information in response to the first information. When the control unit does not receive the second information from the processing unit within the first time threshold, it may be considered that the processing unit does not normally feed back response information, and therefore it may be determined that the processing unit is abnormal.

According to a second aspect, this application provides a vehicle control method. The vehicle control method includes:

A control unit receives main control information and a safety escape trajectory that are sent by a processing unit, where the main control information and the safety escape trajectory are generated by the processing unit based on environment information collected by a sensor; and
the control unit controls a vehicle based on the main control information when the processing unit is normal, and controls the vehicle based on the safety escape trajectory when the processing unit is abnormal.

Optionally, the vehicle control method is applied to the vehicle.

In a possible implementation, that the processing unit is abnormal includes: The processing unit completely fails, or the processing unit partially fails.

In a possible implementation, the method further includes:

The control unit obtains first trajectory correction information based on environment information collected by the sensing apparatus; and
when the processing unit is abnormal, the control unit controls the vehicle based on the safety escape trajectory and the first trajectory correction information, where the first trajectory correction information is used to correct the safety escape trajectory.

In another possible implementation, the method further includes:

When the processing unit partially fails, the processing unit obtains second trajectory correction information based on the environment information collected by the sensing apparatus, and sends the second trajectory correction information to the control unit; and
the control unit controls the vehicle based on the safety escape trajectory and the second trajectory correction information, where the second trajectory correction information is used to correct the safety escape trajectory.

In still another possible implementation, the method further includes:

The control unit obtains first trajectory correction information based on the environment information collected by the sensing apparatus;
when the processing unit partially fails, the processing unit obtains second trajectory correction information based on the environment information collected by the sensing apparatus, and sends the second trajectory correction information to the control unit; and
the control unit controls the vehicle based on the safety escape trajectory, the first trajectory correction information, and the second trajectory correction information, where the first trajectory correction information and the second trajectory correction information are used to correct the safety escape trajectory.

In a possible implementation, the first trajectory correction information includes obstacle information and/or spatial perception information.

In a possible implementation, the second trajectory correction information includes an environment perception result.

In a possible implementation, the safety escape trajectory includes a first safety escape trajectory and/or a second safety escape trajectory. The first safety escape trajectory indicates the vehicle to stop in the current lane, and the second safety escape trajectory indicates the vehicle to pull over to the roadside. The method further includes:

When the safety escape trajectory includes the first safety escape trajectory and the second safety escape trajectory, the control unit selects a target escape trajectory from the first safety escape trajectory and the second safety escape trajectory.

In a possible implementation, the method further includes:

The processing unit predicts next-moment environment information based on current environment information, determines a first parking location based on the next-moment environment information, and performs trajectory planning to obtain the first safety escape trajectory. The first parking location is a location, in the current lane, at which there is no obstacle and at which the vehicle can arrive within first duration.

In a possible implementation, the method further includes:

The processing unit predicts next-moment environment information based on current environment information, determines a second parking location based on the next-moment environment information, and performs trajectory planning to obtain the second safety escape trajectory. The second parking location is a location, at the roadside, at which there is no obstacle and at which the vehicle can arrive within second duration.

In a possible implementation, the method further includes:

When selecting the target escape trajectory from the first safety escape trajectory and the second safety escape trajectory, the control unit preferentially controls, based on the second safety escape trajectory, the vehicle to pull over to the roadside, and predicts pull-over duration; and when it is predicted that the pull-over duration exceeds the second duration, the control unit controls the vehicle to stop in the current lane.

In a possible implementation, the method further includes:

When the control unit does not receive the main control information sent by the processing unit within a first time threshold, the control unit determines that the processing unit is abnormal.

In another possible implementation, the method further includes:

The processing unit reports health information to the control unit; and
when the health information includes abnormal information, the control unit determines that the processing unit is abnormal.

In still another possible implementation, the method further includes:

The control unit sends first information to the processing unit;
the processing unit sends, to the control unit, second information in response to the first information; and
when the control unit does not receive the second information within a second time threshold, the control unit determines that the processing unit is abnormal.

According to a third aspect, this application provides a vehicle control apparatus. The vehicle control apparatus includes a processor. The processor is coupled to a memory, and executes a computer program or instructions in the memory, to implement the method according to any one of the second aspect or the possible implementations of the second aspect. Optionally, the vehicle control apparatus further includes the memory. Optionally, the vehicle control apparatus further includes a communication interface, and the processor is coupled to the communication interface.

According to a fourth aspect, this application provides a computer-readable storage medium. The computer-readable storage medium stores a computer program or instructions. When the computer program or the instructions are executed, the method according to any one of the second aspect or the possible implementations of the second aspect is implemented.

According to a fifth aspect, this application provides a computer program product. The computer program product includes a computer program or instructions. When the computer program or the instructions are executed, the method according to any one of the second aspect or the possible implementations of the second aspect is implemented.

According to a sixth aspect, this application provides a chip. The chip includes a processor, and the processor is configured to execute a computer program or instructions. When the processor executes the computer program or the instructions, the method according to any one of the second aspect or the possible implementations of the second aspect is implemented. Optionally, the chip further includes a communication interface, and the communication interface is configured to receive a signal or send a signal.

According to a seventh aspect, this application provides a chip. The chip includes a logic circuit and an input/output interface. The logic circuit is configured to be coupled to the input/output interface, and transmit data through the input/output interface, to perform the method according to any one of the second aspect or the possible implementations of the second aspect.

According to an eighth aspect, this application provides a vehicle. The vehicle includes the vehicle control apparatus according to any one of the first aspect or the possible implementations of the first aspect.

For beneficial effect brought by the second aspect to the eighth aspect, refer to descriptions of the beneficial effect in the first aspect. Details are not described herein again.

In addition, in a process of performing the method according to any one of the second aspect and the possible implementations of the second aspect, a process of sending information and/or receiving information in the foregoing method may be a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information mentioned in the foregoing method may be outputting information by the processor. For another example, receiving information may be receiving input information by the processor.

Optionally, in a process of performing the method according to any one of the second aspect and the possible implementations of the second aspect, the processor may be a processor specially configured to perform these methods, or may be a processor that performs these methods by executing computer instructions in a memory, for example, a general-purpose processor. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

### BRIEF DESCRIPTION OF DRAWINGS

To describe technical solutions in embodiments of this application more clearly, the following briefly describes accompanying drawings used in embodiments of this application.
FIG. 1 is a diagram of a structure of a vehicle according to an embodiment of this application;
FIG. 2 is another diagram of a structure of a vehicle according to an embodiment of this application;
FIG. 3 is a diagram of a structure of a vehicle control apparatus according to an embodiment of this application;
FIG. 4 is a schematic flowchart of a vehicle control method according to an embodiment of this application;
FIG. 5 is a schematic flowchart of another vehicle control method according to an embodiment of this application;
FIG. 6 is a schematic flowchart of still another vehicle control method according to an embodiment of this application;
FIG. 7 is a schematic flowchart of yet another vehicle control method according to an embodiment of this application;
FIG. 8 is a diagram of a structure of another vehicle control apparatus according to an embodiment of this application; and
FIG. 9 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

In this application, words such as "example" or "for example" indicate giving an example, an illustration, or a description. Any embodiment or design scheme described as an "example" or "for example" in this application should not be explained as being more preferred or having more advantages than another embodiment or design scheme. Specifically, use of the word "example" or "for example" is intended to present a related concept in a specific manner.

"First", "second", and the like mentioned in embodiments of this application do not limit a quantity and an execution sequence, and "first", "second", and the like are not necessarily different. In addition, terms such as "include", "including", and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that, in embodiments of this application, unless otherwise specified or there is a logic conflict, terms and/or descriptions in embodiments are consistent and may be mutually referenced, and technical features in different embodiments may be combined based on an internal logical relationship thereof to form a new embodiment.

It should be understood that, in this application, "at least one" means one or more, and "a plurality of" means two or more. A term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

It should be noted that in this application, "sending" may be "outputting", and "receiving" may be "inputting". In "sending information to A", "to A" indicates only a direction of information transmission, A is a destination, and "sending information to A" is not necessarily directly performed. Therefore, "sending information to A" may also be "outputting information destined for A". Likewise, "receiving information from A" indicates that a source of the information is A, and includes directly receiving the information from A, or includes indirectly receiving the information from A via another device. Therefore, "receiving information from A" can also be "inputting information from A".

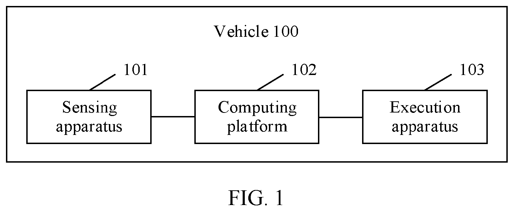

FIG. 1 is a diagram of a structure of a vehicle according to an embodiment of this application. The vehicle 100 includes a sensing apparatus 101, a computing platform 102, and an execution apparatus 103. The sensing apparatus 101 is configured to collect surrounding environment information of the vehicle 100. The computing platform 102 may be an apparatus having a computing capability, and is configured to: process the environment information collected by the sensing apparatus 101 to obtain control information, and send a corresponding control instruction to the execution apparatus 103, so that the execution apparatus 103 performs a corresponding action, to control the vehicle 100.

For example, the computing platform 102 may include a first unit and a second unit. The first unit is responsible for processing the environment information collected by the sensing apparatus 101 to obtain the control information, and the second unit is responsible for sending the corresponding control instruction to the execution apparatus 103. Optionally, the second unit may also process the environment information collected by the sensing apparatus 101 to obtain auxiliary control information. In a possible implementation, the first unit may be a system-on-chip (system-on-chip, SoC), and the second unit may be a microcontroller unit (microcontroller unit, MCU).

For example, the sensing apparatus 101 may include but is not limited to one or more of a camera (camera), a lidar (light detection and ranging, Lidar), an ultrasonic sensor (ultrasonic sensor, USS), a radar (radio detecting and ranging, radar), and an intelligent front camera (intelligent front camera, IFC). The radar may be a millimeter-wave radar.

For example, the execution apparatus 103 may include but is not limited to units configured to control a traveling status of the vehicle 100, such as a drive unit, a brake unit, a transmission unit, and a steering unit.

It may be understood that the structure of the vehicle in FIG. 1 is merely an example implementation in this embodiment of this application. The vehicle in this embodiment of this application is not limited to the foregoing structure. For example, more or fewer components may be included as required.

Optionally, as shown in FIG. 1, the computing platform 102 may be mounted in the vehicle 100. It should be noted that, in another example, the computing platform 102 may not be mounted in the vehicle 100. For example, the computing platform 102 may be mounted in a cloud server. This is not limited in embodiments of this application.

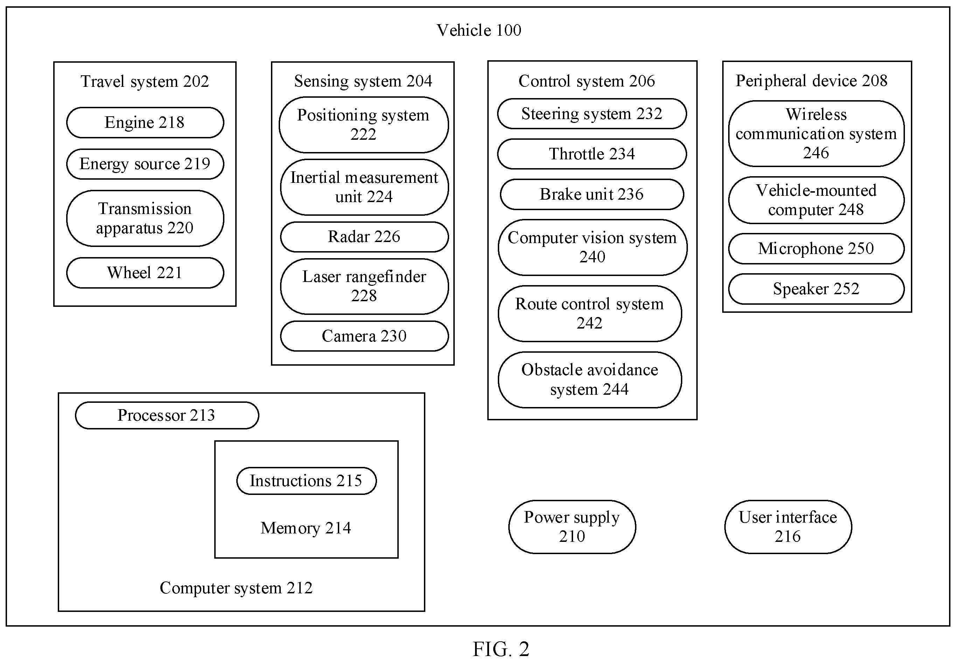

FIG. 2 further describes the structure of the vehicle 100 based on FIG. 1. The vehicle 100 may include various subsystems, such as a propulsion system 202, a sensing system 204, a control system 206, one or more peripheral devices 208, a power supply 210, a computer system 212, and a user interface 216. Optionally, the vehicle 100 may include more or fewer subsystems, and each subsystem may include a plurality of elements. In addition, each subsystem and element of the vehicle 100 may be interconnected in a wired or wireless manner.

The propulsion system 202 may include a component that provides propulsion power for the vehicle 100 to move. In an embodiment, the propulsion system 202 may include an engine 218, an energy source 219, a transmission apparatus 220, and a wheel 221. The engine 218 may be an internal combustion engine, a motor, an air compression engine, or a combination of other types of engines, for example, a hybrid engine including a gasoline engine and a motor or a hybrid engine including an internal combustion engine and an air compression engine. The engine 218 converts energy provided by the energy source 219 into mechanical energy.

Examples of the energy source 219 include gasoline, diesel, other petroleum-based fuels, propane, other compressed gas-based fuels, ethanol, a photovoltaic module, a battery, and other power sources. The energy source 219 may also provide energy for another system of the vehicle 100.

The transmission apparatus 220 may transmit mechanical power from the engine 218 to the wheel 221. The transmission apparatus 220 may include a gearbox, a differential, and a drive shaft. In an embodiment, the transmission apparatus 220 may further include another device, for example, a clutch. The drive shaft may include one or more shafts that may be coupled to one or more wheels 221.

The sensing system 204 may include several sensors that sense the surrounding environment information of the vehicle 100. For example, the sensing system 204 may include a positioning system 222 (the positioning system may be a global positioning system, a BeiDou system, or another positioning system), an inertial measurement unit 224, a radar 226, a laser rangefinder 228, and a camera 230. The sensing system 204 may further include sensors (for example, an in-vehicle air quality monitor, a fuel gauge, and an oil temperature gauge) configured to monitor an internal system of the vehicle 100. Sensor data from one or more of these sensors may be used to detect an object and corresponding features (a location, a shape, a direction, a speed, and the like) of the object. Such detection and recognition are key functions of supporting a safe operation of the vehicle 100.

The positioning system 222 may be configured to estimate a geographical location of the vehicle 100. The inertial measurement unit 224 is configured to sense a location and an orientation change of the vehicle 100 based on an inertial acceleration. In an embodiment, the inertial measurement unit 224 may be a combination of an accelerometer and a gyroscope.

The radar 226 may use a radio signal to sense an object in a surrounding environment of the vehicle 100. In some embodiments, the radar 226 may be further configured to sense a speed and/or a moving direction of an object, in addition to sensing the object.

The laser rangefinder 228 may sense, through a laser, an object in an environment in which the vehicle 100 is located. In some embodiments, the laser rangefinder 228 may include one or more laser sources, a laser scanner, one or more detectors, and another system component.

The camera 230 may be configured to capture a plurality of images of the surrounding environment of the vehicle 100. The camera 230 may be a static camera or a video camera. There may be one or more cameras 230.

The control system 206 controls operations of the vehicle 100 and components of the vehicle 100. The control system 206 may include various elements, including a steering system 232, a throttle 234, a brake unit 236, a computer vision system 240, a route control system 242, and an obstacle avoidance system 244.

The steering system 232 may be operated to adjust a moving direction of the vehicle 100. For example, in an embodiment, the steering system may be a steering wheel system.

The throttle 234 is configured to control an operating speed of the engine 218, to further control a speed of the vehicle 100.

The brake unit 236 is configured to control the vehicle 100 to decelerate. The brake unit 236 may slow down the wheel 221 through friction. In some embodiments, the brake unit 236 may convert kinetic energy of the wheel 221 into a current. Alternatively, the brake unit 236 may reduce a rotational speed of the wheel 221 in another form, to control the speed of the vehicle 100.

The computer vision system 240 may operate to process and analyze an image captured by the camera 230, to recognize an object and/or a feature in a surrounding environment of the vehicle 100, and/or process and analyze data information captured by the radar 226. The object and/or the feature may include a traffic signal, a road boundary, and an obstacle. The computer vision system 240 may use an object recognition algorithm, a structure from motion (structure from motion, SFM) algorithm, video tracking, and another computer vision technology. In some embodiments, the computer vision system 240 may be configured to draw a map for the environment, track an object, estimate a speed of an object, and the like. Optionally, a function of the computer vision system 240 may be implemented through the computing platform 102 in FIG. 1.

The route control system 242 is configured to determine a traveling route of the vehicle 100. In some embodiments, the route control system 242 may determine a traveling route for the vehicle 100 by combining data from the sensing system 204 and one or more predetermined maps. Optionally, a function of the route control system 242 may be implemented through the computing platform 102 in FIG. 1.

The obstacle avoidance system 244 is configured to recognize, evaluate, and avoid or bypass, in another manner, a potential obstacle in the environment of the vehicle 100.

In some embodiments, components other than the components shown above may be added to the control system 206, or some of the components shown above may be replaced with other components, or some of the components shown above may be reduced.

The vehicle 100 interacts with an external sensor, another vehicle, another computer system, or a user through the peripheral device 208. The peripheral device 208 may include a wireless communication system 246, a vehicle-mounted computer 248, a microphone 250, and/or a speaker 252.

In some embodiments, the peripheral device 208 provides a means for a user of the vehicle 100 to interact with the user interface 216. For example, the vehicle-mounted computer 248 may provide information for the user of the vehicle 100. The user interface 216 may further operate the vehicle-mounted computer 248 to receive an input of the user. The vehicle-mounted computer 248 may be operated by using a touchscreen. In another case, the peripheral device 208 may provide a means for the vehicle 100 to communicate with another device located in the vehicle. For example, the microphone 250 may receive audio (for example, a voice command or another audio input) from the user of the vehicle 100. Similarly, the speaker 252 may output audio to the user of the vehicle 100.

The wireless communication system 246 may communicate, in a wireless manner, with one or more devices directly or through a communication network. For example, the wireless communication system 246 may use 3rd generation (3rd generation, 3G) cellular communication, for example, code division multiple access (code division multiple access, CDMA), global mobile communication (global system for mobile communication, GSM), general packet radio service (general packet radio service, GPRS), or 4th generation (4th generation, 4G) cellular communication, for example, long term evolution (long term evolution, LTE) or 5th generation (5th generation, 5G) cellular communication. The wireless communication system 246 may communicate with a wireless local area network (wireless local area network, WLAN) through wireless fidelity (wireless fidelity, Wi-Fi). In some embodiments, the wireless communication system 246 may directly communicate with a device through an infrared link, Bluetooth, or a ZigBee (ZigBee) protocol. The wireless communication system 246 may include one or more dedicated short-range communication (dedicated short-range communication, DSRC) devices, and these devices may include public and/or private data communication between vehicles and/or roadside stations.

The power supply 210 may provide power for various components of the vehicle 100. In an embodiment, the power supply 210 may be a rechargeable lithium-ion or lead-acid battery. One or more battery packs of such a battery may be configured as a power supply to supply power to the various components of the vehicle 100. In some embodiments, the power supply 210 and the energy source 219 may be implemented together.

Some or all functions of the vehicle 100 are controlled by the computer system 212. The computer system 212 may include at least one processor 213, and the processor 213 executes instructions 215 stored in a non-transient computer-readable medium like a memory 214. The computer system 212 may alternatively be a plurality of compute devices that control an individual component or a subsystem of the vehicle 100 in a distributed manner.

The processor 213 may be any conventional processor, for example, a commercially available central processing unit (central processing unit, CPU), or may be an application-specific integrated circuit (application-specific integrated circuit, ASIC) or another hardware-based processor.

In various embodiments described in this specification, the processor may be located far away from the vehicle, and may perform wireless communication with the vehicle. In other aspects, some processes described in this specification are performed by a processor disposed in the vehicle, and others are performed by a remote processor.

In some embodiments, the memory 214 may include instructions 215 (for example, program logic), and the instructions 215 may be executed by the processor 213 to implement various functions of the vehicle 100, including the functions described above. The memory 214 may also include additional instructions, including instructions for sending data to, receiving data from, interacting with, and/or sending instructions for controlling one or more of the propulsion system 202, the sensing system 204, the control system 206, and the peripheral device 208.

In addition to the instructions 215, the memory 214 may further store data, for example, a traveling route and other information. Such information may be used by the vehicle 100 and the computer system 212 when the vehicle 100 operates in an autonomous mode, a semi-autonomous mode, and/or a manual mode.

The user interface 216 is configured to provide information for or receive information from the user of the vehicle 100. In some embodiments, the user interface 216 may include one or more input/output devices in a set of peripheral devices 208, such as the wireless communication system 246, the vehicle-mounted computer 248, the microphone 250, and the speaker 252.

The computer system 212 may control functions of the vehicle 100 based on inputs received from various subsystems (for example, the propulsion system 202, the sensing system 204, and the control system 206) and from the user interface 216. For example, the computer system 212 may control, by using an input from the control system 206, the steering system 232 to avoid obstacles detected by the sensing system 204 and the obstacle avoidance system 244. In some embodiments, the computer system 212 may be operated to provide control on the vehicle 100 and the subsystems of the vehicle 100 in many aspects.

One or more of the foregoing components may be installed separately from or associated with the vehicle 100. For example, the memory 214 may be partially or completely separated from the vehicle 100. The foregoing components may be communicatively coupled together in a wired and/or wireless manner.

It should be understood that the foregoing components are merely examples. In actual application, components in the foregoing modules may be added or deleted based on an actual requirement. FIG. 2 should not be understood as a limitation on embodiments of this application.

It may be understood that the structure of the vehicle in FIG. 2 is merely an example implementation in embodiments of this application, and the vehicle in embodiments of this application includes but is not limited to the foregoing structure.

In embodiments of this application, the vehicle may include a land transport means, a water transport means, an air transport means, an industrial device, an agricultural device, an entertainment device, or the like. For example, the vehicle is a vehicle in a broad sense, and may be a transport means (like a commercial vehicle, a passenger vehicle, a motorcycle, a flight vehicle, or a train), an industrial vehicle (like a forklift, a trailer, or a tractor), an engineering vehicle (like an excavator, a bulldozer, or a crane), an agricultural device (like a lawn mower or a harvester), an amusement device, or a toy vehicle. A type of the vehicle is not specifically limited in embodiments of this application. For another example, the vehicle may be a transport tool like an airplane or a ship.

Based on the vehicle shown in FIG. 1 and FIG. 2, to address the problem described in the background that a safety accident may occur when a chip responsible for intelligent driving-related computing is abnormal and a vehicle control instruction cannot be normally output, embodiments of this application provide the following solutions.

An embodiment of this application provides a vehicle control apparatus. The vehicle control apparatus may be applied to an intelligent driving scenario. The intelligent driving includes intelligent assisted driving, autonomous driving, unmanned driving, and the like. This is not limited in embodiments of this application.

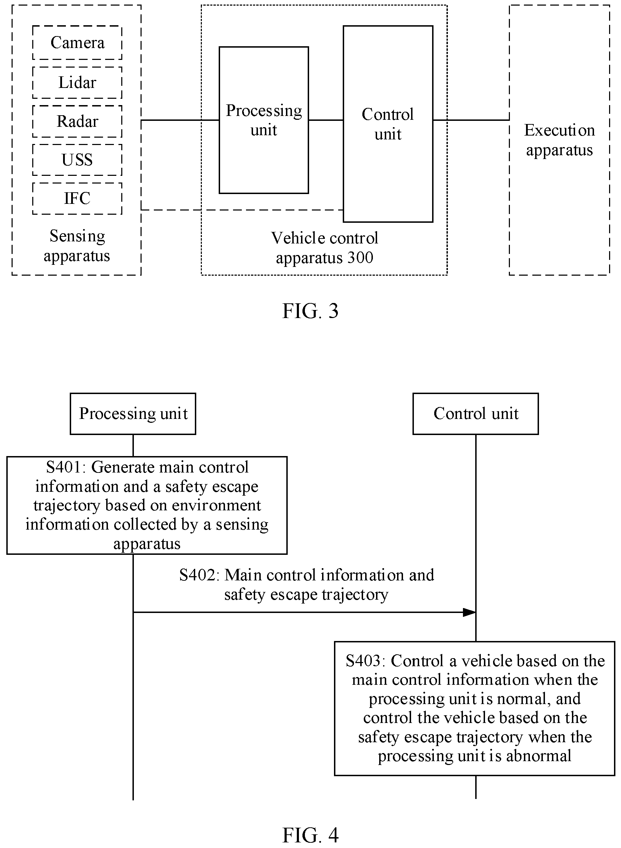

FIG. 3 is a diagram of a structure of a vehicle control apparatus according to an embodiment of this application. For example, the vehicle control apparatus 300 may be used in the vehicle 100 shown in FIG. 1, and the vehicle control apparatus 300 may correspond to the computing platform 102 in FIG. 1.

As shown in FIG. 3, the vehicle control apparatus 300 includes a processing unit and a control unit. The processing unit and the control unit may be software, hardware, or a combination of software and hardware. The units are described as follows.

The processing unit is configured to: generate main control information and a safety escape trajectory based on environment information collected by a sensing apparatus, and send the main control information and the safety escape trajectory to the control unit.

The environment information may be surrounding environment information of the vehicle, and the sensing apparatus is configured to collect the environment information around the vehicle. For example, the environment information may include related information (for example, locations and statuses) of traffic participants, and the traffic participant may include a static traffic participant (for example, a building, a traffic sign, or an overpass) and a dynamic traffic participant (for example, a pedestrian or another vehicle). The main control information may be control information used to control the vehicle to travel normally. The safety escape trajectory may be control information used to control the vehicle to pull over to a safe location.

Optionally, there may be one or more sensing apparatuses. For example, there are a plurality of sensing apparatuses, and the plurality of sensing apparatuses include a camera, a lidar, an ultrasonic sensor, a millimeter-wave radar, and a smart front-view camera.

In a possible implementation, the processing unit is in communication connection to the sensing apparatus, to obtain the environment information collected by the sensing apparatus, and then generates the main control information and the safety escape trajectory based on the obtained environment information.

It may be understood that, as the surrounding environment of the vehicle changes, the environment information collected by the sensing apparatus also changes accordingly, so that the main control information and the safety escape trajectory that are generated by the processing unit based on the environment information may also change dynamically.

Optionally, the processing unit may periodically or aperiodically obtain the environment information collected by the sensing apparatus, and generate the main control information and the safety escape trajectory based on the obtained environment information. For example, the processing unit may obtain, at an interval of a first time, environment information collected by the sensing apparatus, and generate main control information and a safety escape trajectory based on the obtained environment information this time. The first time may be set based on an actual situation or a requirement. This is not limited in embodiments of this application.

After generating the main control information and the safety escape trajectory, the processing unit may send the main control information and the safety escape trajectory to the control unit, so that the control unit performs vehicle control based on the main control information and the safety escape trajectory.

Optionally, there may be one or more control units. When the vehicle control apparatus 300 includes a plurality of control units, the processing unit may distribute the main control information and the safety escape trajectory to each control unit through a same data transmission channel or different data transmission channels. The data transmission channel may include but is not limited to a controller area network (controller area network, CAN) bus or an Ethernet cable. Each control unit may separately control a part of the execution apparatus in the vehicle. For example, one control unit is configured to control a drive apparatus, another control unit is configured to control a braking apparatus, and still another control unit is configured to control a steering apparatus.

The control unit is configured to: when the processing unit is normal, control the vehicle based on the main control information; and when the processing unit is abnormal, control the vehicle based on the safety escape trajectory.

After obtaining the main control information and the safety escape trajectory from the processing unit, the control unit may select, based on health status of the processing unit, corresponding control information from the main control information and the safety escape trajectory to perform vehicle control. The health status of the processing unit may include two situations: normal and abnormal.

When the processing unit is normal, it may be considered that the processing unit can continuously provide reliable main control information to support normal traveling of the vehicle. Therefore, in this case, the control unit may control the vehicle based on the main control information. In a possible implementation, the control unit may send a corresponding control instruction to a related execution apparatus of the vehicle based on the main control information, to control the vehicle to travel normally.

When the processing unit is abnormal, it may be considered that the processing unit cannot continuously provide reliable main control information to support normal traveling of the vehicle, and therefore emergency processing needs to be performed on the vehicle to avoid a possible safety problem. Therefore, in this case, the control unit may control the vehicle based on the safety escape trajectory. In a possible implementation, the control unit may send a corresponding control instruction to a related execution apparatus of the vehicle based on the safety escape trajectory, to control the vehicle to pull over to a safe location.

In the foregoing embodiment, the vehicle control apparatus includes the processing unit and the control unit. In a normal state, the processing unit may generate two types of control information based on surrounding environment information of the vehicle. One type of control information is main control information, used to control the vehicle to travel normally. The other type of control information is a safety escape trajectory, used to control the vehicle to pull over to a safe location. The processing unit sends both types of control information to the control unit, and the control unit may select, based on the health status of the processing unit, a specific type of control information used to control the vehicle. When the processing unit is normal, the control unit may control, based on the main control information, the vehicle to travel normally. When the processing unit is abnormal, the control unit may control, based on the safety escape trajectory, the vehicle to pull over to a safe location.

According to the foregoing embodiment, in a normal state, the processing unit not only generates the main control information used to control the vehicle to travel normally, but also generates the safety escape trajectory used to control the vehicle to pull over to a safe location, and sends both the main control information and the safety escape trajectory to the control unit. When the processing unit is abnormal and cannot continue to provide the main control information, the control unit may control, based on the safety escape trajectory, the vehicle to pull over to a safe location, so that safety control of the vehicle can be implemented when the processing unit is abnormal. In addition, compared with performing a redundancy design on the processing unit to handle abnormal situations, this embodiment of this application does not require a redundant processing unit. This helps reduce costs of implementing vehicle safety control when the processing unit is abnormal.

In a possible implementation, that the processing unit is abnormal includes: The processing unit completely fails, or the processing unit partially fails.

That the processing unit completely fails may be that all functions of the processing unit fail, and therefore information used to control the vehicle cannot continue to be provided. That the processing unit partially fails may be that some functions of the processing unit fail, and other functions do not fail, and therefore some information used to control the vehicle can continue to be provided.

For example, the processing unit includes a first component and a second component. The first component is configured to plan a route, and the second component is configured to process data. If both the first component and the second component are abnormal, it may be considered that the processing unit completely fails. If only a part of the first component and the second component is abnormal while the other part of the components is normal, it may be considered that the processing unit partially fails, and a normal component in the processing unit can still implement a corresponding function.

For example, if the first component is abnormal and the second component is normal, the first component cannot implement a function of the first component, but the second component can still process the environment information collected by the sensing apparatus to obtain a sensing result, to assist in vehicle control. For another example, if the second component is abnormal and the first component is normal, the second component cannot implement a function of the second component. Optionally, the function of the second component may be switched to the first component. In other words, the first component processes the environment information collected by the sensing apparatus to obtain a sensing result, to assist in vehicle control.

For example, the first component may include one or more CPU cores, and the second component may include one or more AI cores. When the first component includes a plurality of CPU cores, that the first component is abnormal may be that all the plurality of CPU cores are abnormal, or may be that some CPU cores are abnormal and the other CPU cores are normal. It may be understood that when only some CPU cores are abnormal, the other normal CPU cores can implement some functions. For example, the some functions may be to correct a planned route.

When the second component includes a plurality of AI cores, that the second component is abnormal may be that all the plurality of AI cores are abnormal, or may be that some AI cores are abnormal and the other AI cores are normal. It may be understood that when only some AI cores are abnormal, the other normal AI cores can implement some functions. For example, the some functions may be processing image data collected by a camera to implement image-based object detection, or may be processing point cloud data collected by a lidar to implement point cloud-based object detection.

Optionally, the some functions may be determined based on a functional computational power requirement. The functional computational power requirement includes computational power required for implementing each function, and may be preconfigured. Specifically, a health management module may be disposed in the processing unit. After detecting that the processing unit partially fails, the health management module may evaluate, based on the functional computational power requirement, which functions can be supported by remaining computational power of the processing unit, so as to determine the functions that can still be implemented by the processing unit.

In the foregoing implementation, a situation in which the processing unit is abnormal is subdivided into two situations: a situation in which the processing unit completely fails and a situation in which the processing unit partially fails, so that in each situation, corresponding control information may be used to perform corresponding control on the vehicle. This helps improve vehicle control reliability.

In a possible implementation, the control unit is further configured to: obtain first trajectory correction information based on the environment information collected by the sensing apparatus; and when the processing unit completely fails, control the vehicle based on the safety escape trajectory and the first trajectory correction information, where the first trajectory correction information is used to correct the safety escape trajectory.

The first trajectory correction information may be auxiliary control information generated by the control unit based on the environment information collected by the sensing apparatus. The first trajectory correction information may reflect a surrounding environment of the vehicle, and may be used to correct the safety escape trajectory, so that the first trajectory correction information may be used to assist in vehicle control.

In a possible implementation, the control unit is in communication connection to the sensing apparatus, to obtain the environment information collected by the sensing apparatus, and then generates the first trajectory correction information based on the obtained environment information.

It may be understood that, as the surrounding environment of the vehicle changes, the environment information collected by the sensing apparatus also changes accordingly, so that the first trajectory correction information generated by the control unit based on the environment information may also change dynamically.

Optionally, the control unit may periodically or aperiodically obtain the environment information collected by the sensing apparatus, and generate the first trajectory correction information based on the obtained environment information. For example, the control unit may obtain, at an interval of a second time, environment information collected by the sensing apparatus, and generate first trajectory correction information based on the obtained environment information. The second time may be set based on an actual situation or a requirement. This is not limited in embodiments of this application.

When the processing unit is abnormal, the control unit may control, based on the safety escape trajectory, the vehicle to pull over to a safe location. In this process, the control unit may further obtain the first trajectory correction information based on the environment information collected by the sensing apparatus, and correct the safety escape trajectory based on the first trajectory correction information, to adapt to a change of a surrounding environment of the vehicle.

For example, there is originally no obstacle on the safety escape trajectory. In a process in which the vehicle pulls over to a safe location based on the safety escape trajectory, if the first trajectory correction information indicates that an obstacle (for example, another vehicle) appears on the safety escape trajectory, the control unit may correct the safety escape trajectory, so that the vehicle can bypass the obstacle and pull over to a safe location.

In the foregoing implementation, when the processing unit is abnormal, the control unit may obtain the first trajectory correction information based on the environment information collected by the sensing apparatus. In this way, perception of the surrounding environment of the vehicle can be maintained. The control unit may further control the vehicle based on the safety escape trajectory and the first trajectory correction information, so that in a process in which the vehicle pulls over to a safe location based on the safety escape trajectory, the first trajectory correction information may be used to assist in vehicle control, thereby helping further improve safety.

In a possible implementation, the first trajectory correction information includes obstacle information and/or spatial perception information.

The obstacle may include a static obstacle (for example, a building, a traffic sign, or an overpass) and a dynamic obstacle (for example, a pedestrian or another vehicle). The obstacle information may include information such as a location and a speed of an obstacle, and may be used to reflect an obstacle condition around the vehicle. The spatial perception information may be related information of surrounding space of the vehicle, and may be used to reflect situations like road boundaries or drivable areas.

In a possible implementation, the sensing apparatus includes a first-type sensing apparatus, and the control unit obtains the obstacle information based on environment information (denoted as first environment information) from the first-type sensing apparatus. Optionally, the first-type sensing apparatus includes one or more of an ultrasonic radar, a millimeter-wave radar, and a smart front-view camera.

In an example, the first environment information may be original information (for example, an ultrasonic signal or a millimeter wave signal) collected by the first-type sensing apparatus, and the control unit may process the original information to obtain the obstacle information. In another example, the first environment information may be information (for example, obstacle information) obtained after the first-type sensing apparatus processes original information collected by the first-type sensing apparatus. In other words, the first-type sensing apparatus may directly provide the obstacle information, so that the control unit can directly obtain the obstacle information.

In still another possible implementation, the sensing apparatus includes a second-type sensing apparatus, and the control unit obtains the spatial perception information based on environment information (denoted as second environment information) from the second-type sensing apparatus. Optionally, the second-type sensing apparatus includes one or more of a camera and a lidar.

In an example, the second environment information may be original information (for example, image data or point cloud data) collected by the second-type sensing apparatus, and the control unit may process the original information to obtain the spatial perception information. In another example, the second environment information may be information (for example, spatial perception information) obtained after the second-type sensing apparatus processes original information collected by the second-type sensing apparatus. In other words, the second-type sensing apparatus may directly provide the spatial perception information, so that the control unit can directly obtain the spatial perception information.

In the foregoing implementation, the first trajectory correction information includes the obstacle information and/or the spatial perception information. The obstacle information and/or the spatial perception information can accurately reflect a surrounding environment status of the vehicle, and is used to correct the safety escape trajectory, so that traveling safety of the vehicle in an abnormal situation can be further improved.

In a possible implementation, the processing unit is further configured to: when the processing unit partially fails, obtain second trajectory correction information based on the environment information collected by the sensing apparatus, and send the second trajectory correction information to the control unit. The control unit is further configured to control the vehicle based on the safety escape trajectory and second trajectory correction information, where the second trajectory correction information is used to correct the safety escape trajectory.

The second trajectory correction information may be auxiliary control information generated by normal components (that is, some components that do not fail) in the processing unit based on the environment information collected by the sensing apparatus, or may be auxiliary control information obtained by the processing unit by using remaining computational power. The second trajectory correction information may reflect a surrounding environment of the vehicle, and may be used to correct the safety escape trajectory, so that the second trajectory correction information may be used to assist in vehicle control.

It may be understood that, as the surrounding environment of the vehicle changes, the environment information collected by the sensing apparatus also changes accordingly, so that the second trajectory correction information generated by the normal component in the processing unit based on the environment information may also change dynamically.

Optionally, the normal component in the processing unit may periodically or aperiodically obtain the environment information collected by the sensing apparatus, and generate the second trajectory correction information based on the obtained environment information. For example, the normal component in the processing unit may obtain, at an interval of a third time, environment information collected by the sensing apparatus, and generate second trajectory correction information based on the obtained environment information. The third time may be set based on an actual situation or a requirement. This is not limited in embodiments of this application.

After obtaining the second trajectory correction information, the processing unit may send the second trajectory correction information to the control unit, so that the control unit can assist in vehicle control based on the second trajectory correction information.

When the processing unit partially fails, the control unit may control, based on the safety escape trajectory, the vehicle to pull over to a safe location. In this process, the processing unit may further process, by using the remaining computational power, the environment information collected by the sensing apparatus, to obtain the second trajectory correction information. The control unit may further correct the safety escape trajectory based on the second trajectory correction information, to adapt to a change of the surrounding environment of the vehicle.

For example, there is originally no obstacle on the safety escape trajectory. In a process in which the vehicle pulls over to a safe location based on the safety escape trajectory, if the second trajectory correction information indicates that an obstacle (for example, another vehicle) appears on the safety escape trajectory, the control unit may correct the safety escape trajectory, so that the vehicle can bypass the obstacle and pull over to a safe location.

In the foregoing implementation, when the processing unit partially fails, the processing unit may process, by using the remaining computational power, the environment information collected by the sensing apparatus, to obtain the second trajectory correction information. In this way, perception of the surrounding environment of the vehicle can be maintained, the processing unit can be fully utilized, and a waste of computational power can be reduced. The control unit may control the vehicle based on the safety escape trajectory and the second trajectory correction information, so that in a process in which the vehicle stops at a safe location based on the safety escape trajectory, the second trajectory correction information may be used to assist in vehicle control, thereby helping further improve safety.

It should be noted that, in addition to the foregoing intelligent driving scenario, embodiments of this application may be further applied to scenarios involving heterogeneous computing, for example, in the field of cloud computing, when a central processing unit (central processing unit, CPU), a graphics processing unit (graphics processing unit, GPU), or a neural network processing unit (neural network processing unit, NPU) of a part of servers in a system fails, a remaining system capacity may be used to provide simplified functions.

In a possible implementation, the second trajectory correction information includes an environment perception result.

The environment perception result may be a result obtained by the processing unit by using remaining computational power to process the environment information collected by the sensing apparatus. For example, the environment perception result may include information such as a location and a speed of an obstacle. For another example, the environment perception result may include information like a road boundary or a drivable area.

In the foregoing implementation, the second trajectory correction information includes the environment perception result, and the environment perception result can accurately reflect a surrounding environment status of the vehicle, and is used to correct the safety escape trajectory, so that traveling safety of the vehicle in an abnormal situation can be further improved.

In a possible implementation, the control unit is further configured to obtain first trajectory correction information based on the environment information collected by the sensing apparatus. The processing unit is further configured to: when the processing unit partially fails, obtain second trajectory correction information based on the environment information collected by the sensing apparatus, and send the second trajectory correction information to the control unit. The control unit is further configured to control the vehicle based on the safety escape trajectory, the first trajectory correction information, and the second trajectory correction information. The first trajectory correction information and the second trajectory correction information are used to correct the safety escape trajectory.

For specific descriptions of the first trajectory correction information and the second trajectory correction information, refer to related descriptions in the foregoing embodiments. Details are not described herein again.

When the processing unit partially fails, the control unit may control, based on the safety escape trajectory, the vehicle to pull over to a safe location. In this process, the control unit may further obtain the first trajectory correction information based on the environment information collected by the sensing apparatus, and the processing unit may further process, by using the remaining computational power, the environment information collected by the sensing apparatus, to obtain the second trajectory correction information. The control unit may further correct the safety escape trajectory based on the first trajectory correction information and the second trajectory correction information, to adapt to a change of the surrounding environment of the vehicle.

For example, there is originally no obstacle on the safety escape trajectory. In a process in which the vehicle pulls over to a safe location based on the safety escape trajectory, if the first trajectory correction information and/or the second trajectory correction information indicate/indicates that an obstacle (for example, another vehicle) appears on the safety escape trajectory, the control unit may correct the safety escape trajectory, so that the vehicle can bypass the obstacle and pull over to a safe location.

In the foregoing implementation, when the processing unit partially fails, the control unit may obtain the first trajectory correction information based on the environment information collected by the sensing apparatus, and the processing unit may process, by using the remaining computational power, the environment information collected by the sensing apparatus, to obtain the second trajectory correction information. In this way, perception of the surrounding environment of the vehicle can be maintained, and more abundant trajectory correction information is obtained, so that the processing unit can be fully utilized, and a waste of computational power can be reduced. The control unit may control the vehicle based on the safety escape trajectory, the first trajectory correction information, and the second trajectory correction information, so that in a process in which the vehicle pulls over to a safe location based on the safety escape trajectory, the first trajectory correction information, and the second trajectory correction information may be used to assist in vehicle control, thereby helping further improve safety.

In a possible implementation, the safety escape trajectory includes a first safety escape trajectory and/or a second safety escape trajectory. The first safety escape trajectory indicates the vehicle to stop in a current lane, and the second safety escape trajectory indicates the vehicle to pull over to a roadside. When the safety escape trajectory includes the first safety escape trajectory and the second safety escape trajectory, the control unit is further configured to select a target escape trajectory from the first safety escape trajectory and the second safety escape trajectory.

The first safety escape trajectory may be control information used to control the vehicle to pull over to a safe location in the current lane, and the second safety escape trajectory may be control information used to control the vehicle to pull over to a safe location at the roadside.

In a possible case, the safety escape trajectory includes only the first safety escape trajectory. For example, the processing unit detects, based on the surrounding environment information of the vehicle, that the current lane meets a safe parking condition but the roadside does not meet the safe parking condition. In this case, the processing unit may generate only the first safety escape trajectory. Therefore, when the processing unit is abnormal, the control unit may control the vehicle to stop in the current lane based on the first safety escape trajectory.

In another possible case, the safety escape trajectory includes only the second safety escape trajectory. For example, the processing unit detects, based on the surrounding environment information of the vehicle, that the current lane does not meet the safe parking condition, but the roadside meets the safe parking condition. In this case, the processing unit may generate only the second safety escape trajectory. Therefore, when the processing unit is abnormal, the control unit may control the vehicle to pull over to the roadside based on the second safety escape trajectory.

In still another possible case, the safety escape trajectory includes the first safety escape trajectory and the second safety escape trajectory. For example, the processing unit detects, based on the surrounding environment information of the vehicle, that both the current lane and the roadside meet the safe parking condition. In this case, the processing unit may generate the first safety escape trajectory and the second safety escape trajectory. When the safety escape trajectory includes the first safety escape trajectory and the second safety escape trajectory, the control unit may select the target escape trajectory from the first safety escape trajectory and the second safety escape trajectory. The target escape trajectory may be the first safety escape trajectory, or may be the second safety escape trajectory. Therefore, when the processing unit is abnormal, the control unit may control the vehicle to stop in the current lane based on the first safety escape trajectory, or pull over to the roadside based on the second safety escape trajectory.

It should be noted that there may be one or more first safety escape trajectories, and there may be one or more second safety escape trajectories. This is not limited in embodiments of this application.

In the foregoing implementation, the safety escape trajectory includes the first safety escape trajectory and/or the second safety escape trajectory. When the processing unit is abnormal, the control unit may control the vehicle to stop in the current lane based on the first safety escape trajectory, or pull over to the roadside based on the second safety escape trajectory. In this way, a plurality of solutions for dealing with an abnormal situation are provided, to help ensure that the vehicle can safely stop in the abnormal situation.

In a possible implementation, the processing unit is further configured to: predict next-moment environment information based on current environment information, determine a first parking location based on the next-moment environment information, and perform trajectory planning to obtain the first safety escape trajectory. The first parking location is a location, in the current lane, at which there is no obstacle and at which the vehicle can arrive within first duration.

The foregoing implementation provides a manner of generating the first safety escape trajectory. The current environment information may indicate information such as locations and statuses of traffic participants around the vehicle at a current moment, and the next-moment environment information may indicate information such as locations and statuses of traffic participants around the vehicle at a next moment. The first parking location may be a safe location at which the vehicle can stop in the current lane. The first duration may be maximum duration allowed for the vehicle to stop in the current lane in an abnormal situation. In other words, the vehicle needs to complete stopping in the current lane within the first duration after an abnormal situation occurs. It should be understood that the first duration may be pre-agreed on or preconfigured. This is not limited in embodiments of this application.

For example, the processing unit may determine a start location based on a current location of the vehicle, and may further determine the first parking location and each safe location between the start location and the first parking location based on information such as locations and statuses of traffic participants around the vehicle at each moment. Then, the first safety escape trajectory is obtained through planning based on the start location, the first parking location, and each safe location between the start location and the first parking location.

In the foregoing implementation, the processing unit may determine, based on the surrounding environment information of the vehicle, the safe location at which the vehicle can stop in the current lane, and plan the first safety escape trajectory. Therefore, in an abnormal situation, the control unit may control the vehicle to stop in the current lane based on the first safety escape trajectory, so that the vehicle reaches a safe state.

In a possible implementation, the processing unit is further configured to: predict next-moment environment information based on current environment information, determine a second parking location based on the next-moment environment information, and perform trajectory planning to obtain the second safety escape trajectory. The second parking location is a location, at the roadside, at which there is no obstacle and at which the vehicle can arrive within second duration.

The foregoing implementation provides a manner of generating the second safety escape trajectory. The current environment information may indicate information such as locations and statuses of traffic participants around the vehicle at a current moment, and the next-moment environment information may indicate information such as locations and statuses of traffic participants around the vehicle at a next moment. The second parking location may be a safe roadside location to which the vehicle can pull over. The second duration may be maximum duration allowed for the vehicle to pull over to the roadside in an abnormal situation. In other words, the vehicle needs to complete pulling over within the second duration after the abnormal situation occurs. It should be understood that the second duration may be pre-agreed on or preconfigured. This is not limited in embodiments of this application.

For example, the processing unit may determine a start location based on a current location of the vehicle, and may further determine the second parking location and each safe location between the start location and the second parking location based on information such as locations and statuses of traffic participants around the vehicle at each moment. Then, the second safety escape trajectory is obtained through planning based on the start location, the second parking location, and each safe location between the start location and the second parking location.

In the foregoing implementation, the processing unit may determine, based on the surrounding environment information of the vehicle, the safe location at which the vehicle can pull over to the roadside, and plan the second safety escape trajectory. Therefore, in an abnormal situation, the control unit may control the vehicle to pull over to the roadside based on the second safety escape trajectory, so that the vehicle reaches a safe state.

In a possible implementation, when selecting the target escape trajectory from the first safety escape trajectory and the second safety escape trajectory, the control unit is configured to: preferentially control, based on the second safety escape trajectory, the vehicle to pull over to the roadside, and predict pull-over duration; and when it is predicted that the pull-over duration exceeds the second duration, control the vehicle to stop in the current lane.

When the safety escape trajectory includes the first safety escape trajectory and the second safety escape trajectory, the control unit may preferentially select the second safety escape trajectory as the target escape trajectory, to control, in an abnormal situation, the vehicle to preferentially pull over to the roadside based on the second safety escape trajectory.

In a process in which the vehicle pulls over to the roadside based on the second safety escape trajectory, the control unit may further periodically or aperiodically predict the pull-over duration. When it is predicted that the pull-over duration exceeds the second duration, it may be considered that the pull-over duration exceeds a safe range, it may be considered unsafe for the vehicle to continue to pull over. Therefore, the control unit may adjust a vehicle control solution, so that the vehicle stops in the current lane, to prevent potential safety problems that may occur when the vehicle continues to pull over.

In the foregoing implementation, when the safety escape trajectory includes the first safety escape trajectory and the second safety escape trajectory, the control unit controls the vehicle to preferentially pull over to the roadside based on the second safety escape trajectory. In this way, impact on other vehicles in the lane can be reduced. In a process in which the vehicle pulls over to the roadside based on the second safety escape trajectory, the control unit may further predict pull-over duration. When it is predicted that the pull-over duration exceeds a safe range, a vehicle control solution may be adjusted in time, so that the vehicle stops in the current lane, to ensure that the vehicle can stop safely.

In a possible implementation, the control unit is further configured to: when the main control information sent by the processing unit is not received within a first time threshold, determine that the processing unit is abnormal.

The foregoing implementation provides a manner of determining the health status of the processing unit. When the processing unit is normal, the processing unit may send the main control information to the control unit at a specific interval. Correspondingly, the control unit may receive the main control information from the processing unit at a specific interval.

The first time threshold may be a maximum time interval between two consecutive times of sending the main control information by the processing unit, or a maximum time interval between two consecutive times of receiving the main control information by the control unit. When the control unit does not receive the main control information from the processing unit within the first time threshold, it may be determined that the processing unit is abnormal. It should be understood that the first time threshold may be set based on an actual situation or a requirement. This is not limited in embodiments of this application.

In the foregoing implementation, the control unit may determine the health status of the processing unit based on a receiving status of the main control information. When the control unit does not receive the main control information from the processing unit within the first time threshold, it may be considered that the processing unit does not normally send the main control information, and therefore it may be determined that the processing unit is abnormal.

In another possible implementation, the processing unit is further configured to report health information to the control unit. The control unit is further configured to: when the health information includes abnormal information, determine that the processing unit is abnormal.

The foregoing implementation provides another manner of determining the health status of the processing unit. The processing unit may detect the health status of the processing unit, and report the health information to the control unit. Correspondingly, the control unit may receive the health information from the processing unit, where the health information may indicate the health status of the processing unit. When the health information includes abnormal information, it may be determined that the processing unit is abnormal.

In the foregoing implementation, the processing unit may actively report the health information to the control unit, and the control unit may determine the health status of the processing unit based on the health information reported by the processing unit. When the health information includes abnormal information, it may be considered that the processing unit detects an abnormal situation of the processing unit, and therefore it may be determined that the processing unit is abnormal.

In still another possible implementation, the control unit is further configured to send first information to the processing unit. The processing unit is further configured to send, to the control unit, second information in response to the first information. The control unit is further configured to: when the second information is not received within a second time threshold, determine that the processing unit is abnormal.

The foregoing implementation provides still another manner of determining the health status of the processing unit. There is a question answering mechanism between the control unit and the processing unit. The control unit may send the first information to the processing unit at a specific interval. Correspondingly, the processing unit may receive the first information from the control unit at a specific interval. When the processing unit is normal, the processing unit may respond to the first information received each time and feed back the second information. Correspondingly, the control unit may receive the second information from the processing unit at a specific interval.

The second time threshold may be a maximum time interval from a moment at which the control unit sends the first information to a moment at which the processing unit feeds back the second information. When the control unit does not receive the second information from the processing unit within the second time threshold after sending the first information, it may be determined that the processing unit is abnormal. It should be understood that the second time threshold may be set based on an actual situation or a requirement. This is not limited in embodiments of this application.

In the foregoing implementation, the control unit may send the first information to the processing unit, and determine the health status of the processing unit based on a receiving status of the second information in response to the first information. When the control unit does not receive the second information from the processing unit within the first time threshold, it may be considered that the processing unit does not normally feed back the response information, and therefore it may be determined that the processing unit is abnormal.

The foregoing describes in detail the vehicle control apparatus in embodiments of this application. The following describes method embodiments in embodiments of this application.

FIG. 4 is a schematic flowchart of a vehicle control method according to an embodiment of this application. In the embodiment shown in FIG. 4, an example in which a processing unit and a control unit interact with each other is used to illustrate the method.

As shown in FIG. 4, the vehicle control method may include but is not limited to the following step S401 to step S403.

S401: The processing unit generates main control information and a safety escape trajectory based on environment information collected by a sensing apparatus.

S402: The processing unit sends the main control information and the safety escape trajectory to the control unit, and correspondingly, the control unit receives the main control information and the safety escape trajectory from the processing unit.

S403: The control unit controls a vehicle based on the main control information when the processing unit is normal, and controls the vehicle based on the safety escape trajectory when the processing unit is abnormal.

In a possible implementation, that the processing unit is abnormal includes: The processing unit completely fails, or the processing unit partially fails.

In a possible implementation, the safety escape trajectory includes a first safety escape trajectory and/or a second safety escape trajectory. The first safety escape trajectory indicates the vehicle to stop in a current lane, and the second safety escape trajectory indicates the vehicle to pull over to the roadside. When the safety escape trajectory includes the first safety escape trajectory and the second safety escape trajectory, the control unit selects a target escape trajectory from the first safety escape trajectory and the second safety escape trajectory.

In a possible implementation, the processing unit predicts next-moment environment information based on current environment information, determines a first parking location based on the next-moment environment information, and performs trajectory planning to obtain the first safety escape trajectory. The first parking location is a location, in the current lane, at which there is no obstacle and at which the vehicle can arrive within first duration.

In a possible implementation, the processing unit predicts next-moment environment information based on current environment information, determines a second parking location based on the next-moment environment information, and performs trajectory planning to obtain the second safety escape trajectory. The second parking location is a location, at a roadside, at which there is no obstacle and at which the vehicle can arrive within second duration.

In a possible implementation, when selecting the target escape trajectory from the first safety escape trajectory and the second safety escape trajectory, the control unit preferentially controls, based on the second safety escape trajectory, the vehicle to pull over to the roadside, and predicts pull-over duration; and when it is predicted that the pull-over duration exceeds the second duration, the control unit controls the vehicle to stop in the current lane.

In a possible implementation, when the control unit does not receive the main control information sent by the processing unit within a first time threshold, the control unit determines that the processing unit is abnormal.

In a possible implementation, the processing unit reports health information to the control unit, and correspondingly, the control unit receives the health information from the control unit. When the health information includes abnormal information, the control unit determines that the processing unit is abnormal.

In a possible implementation, the control unit sends first information to the processing unit, and correspondingly, the processing unit receives the first information from the control unit. The processing unit sends, to the control unit, second information in response to the first information. Correspondingly, the control unit receives the second information from the processing unit. When the control unit does not receive the second information within a second time threshold, the control unit determines that the processing unit is abnormal.

It should be understood that, for specific descriptions of the foregoing method embodiments, refer to related descriptions in the foregoing apparatus embodiments. Details are not described herein again. According to the foregoing method embodiment, in a normal state, in addition to generating the main control information used to control the vehicle to travel normally, the processing unit further generates the safety escape trajectory used to control the vehicle to pull over to a safe location, and sends both the main control information and the safety escape trajectory to the control unit. When the processing unit is abnormal and cannot continue to provide the main control information, the control unit may control, based on the safety escape trajectory, the vehicle to pull over to the safe location, so that safety control of the vehicle can be implemented when the processing unit is abnormal. In addition, compared with performing a redundancy design on the processing unit to handle abnormal situations, this embodiment of this application does not require a redundant processing unit. This helps reduce costs of implementing vehicle safety control when the processing unit is abnormal.

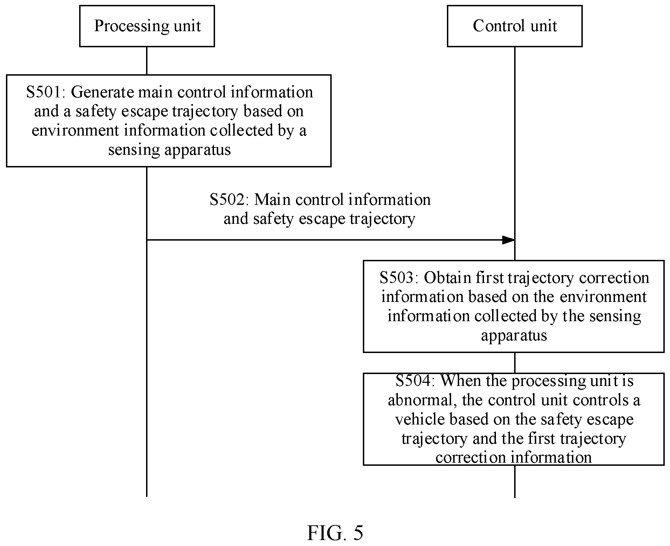

FIG. 5 is a schematic flowchart of another vehicle control method according to an embodiment of this application. In the embodiment shown in FIG. 5, an example in which a processing unit and a control unit interact with each other is used to illustrate the method.

As shown in FIG. 5, the vehicle control method may include but is not limited to the following step S501 to step S504.

S501: The processing unit generates main control information and a safety escape trajectory based on environment information collected by a sensing apparatus.

S502: The processing unit sends the main control information and the safety escape trajectory to the control unit, and correspondingly, the control unit receives the main control information and the safety escape trajectory from the processing unit.

S503: The control unit obtains first trajectory correction information based on the environment information collected by the sensing apparatus.

S504: When the processing unit is abnormal, the control unit controls a vehicle based on the safety escape trajectory and the first trajectory correction information.

In a possible implementation, the first trajectory correction information includes obstacle information and/or spatial perception information.

It should be understood that, for specific descriptions of the foregoing method embodiments, refer to related descriptions in the foregoing apparatus embodiments. Details are not described herein again. According to the foregoing method embodiment, when the processing unit is abnormal, the control unit may obtain the first trajectory correction information based on the environment information collected by the sensing apparatus. In this way, perception of a surrounding environment of the vehicle can be maintained. The control unit may further control the vehicle based on the safety escape trajectory and the first trajectory correction information, so that in a process in which the vehicle pulls over to a safe location based on the safety escape trajectory, the first trajectory correction information may be used to assist in vehicle control, thereby helping further improve safety.

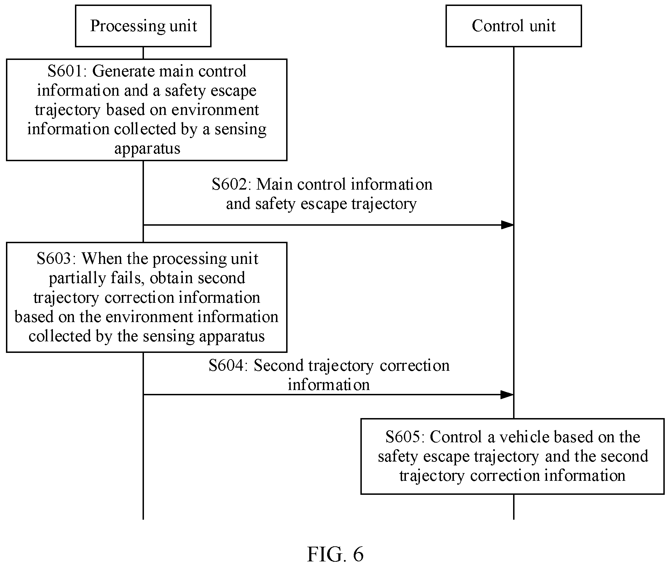

FIG. 6 is a schematic flowchart of still another vehicle control method according to an embodiment of this application. In the embodiment shown in FIG. 6, an example in which a processing unit and a control unit interact with each other is used to illustrate the method.

As shown in FIG. 6, the vehicle control method may include but is not limited to the following step S601 to step S605.

S601: The processing unit generates main control information and a safety escape trajectory based on environment information collected by a sensing apparatus.

S602: The processing unit sends the main control information and the safety escape trajectory to the control unit, and correspondingly, the control unit receives the main control information and the safety escape trajectory from the processing unit.

S603: When the processing unit partially fails, the processing unit obtains second trajectory correction information based on the environment information collected by the sensing apparatus.

S604: The processing unit sends the second trajectory correction information to the control unit, and correspondingly, the control unit receives the second trajectory correction information from the processing unit.

S605: The control unit controls a vehicle based on the safety escape trajectory and the second trajectory correction information.

In a possible implementation, the second trajectory correction information includes an environment perception result.

It should be understood that, for specific descriptions of the foregoing method embodiments, refer to related descriptions in the foregoing apparatus embodiments. Details are not described herein again. According to the foregoing method embodiment, when the processing unit partially fails, the processing unit may process, by using remaining computational power, the environment information collected by the sensing apparatus, to obtain the second trajectory correction information. In this way, perception of a surrounding environment of the vehicle can be maintained, the processing unit can be fully utilized, and a waste of computational power can be reduced. The control unit may control the vehicle based on the safety escape trajectory and the second trajectory correction information, so that in a process in which the vehicle pulls over to a safe location based on the safety escape trajectory, the second trajectory correction information may be used to assist in vehicle control, thereby helping further improve safety.

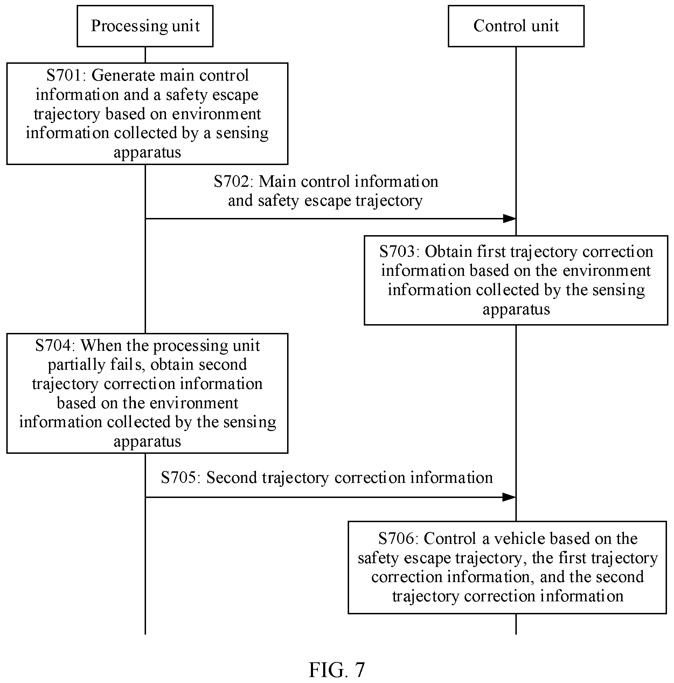

FIG. 7 is a schematic flowchart of yet another vehicle control method according to an embodiment of this application. In the embodiment shown in FIG. 7, an example in which a processing unit and a control unit interact with each other is used to illustrate the method.

As shown in FIG. 7, the vehicle control method may include but is not limited to the following step S701 to step S706.

S701: The processing unit generates main control information and a safety escape trajectory based on environment information collected by a sensing apparatus.

S702: The processing unit sends the main control information and the safety escape trajectory to the control unit, and correspondingly, the control unit receives the main control information and the safety escape trajectory from the processing unit.

S703: The control unit obtains first trajectory correction information based on the environment information collected by the sensing apparatus.

S704: When the processing unit partially fails, the processing unit obtains second trajectory correction information based on the environment information collected by the sensing apparatus.

S705: The processing unit sends the second trajectory correction information to the control unit, and correspondingly, the control unit receives the second trajectory correction information from the processing unit.

S706: The control unit controls a vehicle based on the safety escape trajectory, the first trajectory correction information, and the second trajectory correction information.

It should be understood that, for specific descriptions of the foregoing method embodiments, refer to related descriptions in the foregoing apparatus embodiments. Details are not described herein again. According to the foregoing method embodiment, when the processing unit partially fails, the control unit may obtain the first trajectory correction information based on the environment information collected by the sensing apparatus, and the processing unit may process, by using remaining computational power, the environment information collected by the sensing apparatus, to obtain the second trajectory correction information. In this way, perception of a surrounding environment of the vehicle can be maintained, and more abundant trajectory correction information is obtained, so that the processing unit can be fully utilized, and a waste of computational power can be reduced. The control unit may control the vehicle based on the safety escape trajectory, the first trajectory correction information, and the second trajectory correction information, so that in a process in which the vehicle pulls over to a safe location based on the safety escape trajectory, the first trajectory correction information, and the second trajectory correction information may be used to assist in vehicle control, thereby helping further improve safety.

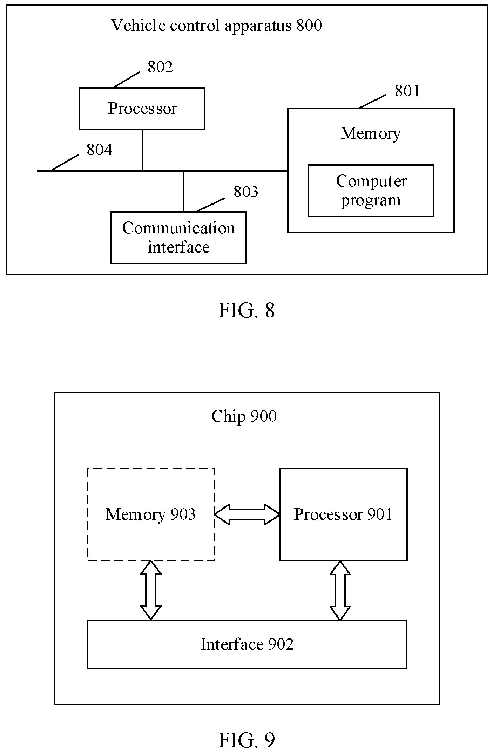

FIG. 8 is a diagram of a structure of another vehicle control apparatus according to an embodiment of this application. The vehicle control apparatus 800 may include a memory 801 and a processor 802. Further, optionally, the vehicle control apparatus 800 may further include a communication interface 803 and a bus 804. Communication connections between the memory 801, the processor 802, and the communication interface 803 are implemented through the bus 804. The communication interface 803 is configured to exchange data with another device.

The memory 801 is configured to provide storage space, and the storage space may store data such as an operating system and a computer program. The processor 802 is a module that performs arithmetic and logical operations, and may be one or a combination of processing modules such as a central processing unit (central processing unit, CPU), a graphics processing unit (graphics processing unit, GPU), or a microprocessor unit (microprocessor unit, MPU). The processor 802 may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The processor 802 invokes the computer program stored in the memory 801, to perform the method steps in the foregoing method embodiments. For specific content, refer to the foregoing method embodiments. Details are not described herein again.

For a case in which the vehicle control apparatus may be a chip or a chip system, refer to a diagram of a structure of a chip shown in FIG. 9.

As shown in FIG. 9, a chip 900 includes a processor 901 and an interface 902. There may be one or more processors 901 and a plurality of interfaces 902. It should be noted that a function corresponding to each of the processor 901 and the interface 902 may be implemented by using a hardware design, may be implemented by using a software design, or may be implemented by a combination of software and hardware. This is not limited herein.

Optionally, the chip 900 may further include a memory 903. The memory 903 is configured to store necessary program instructions and data.

In this application, the processor 901 may be configured to invoke, from the memory 903, an implementation program of the vehicle control method provided in one or more embodiments of this application, and execute instructions included in the program. The interface 902 may be configured to output an execution result of the processor 901. In this application, the interface 902 may be specifically configured to output messages or information of the processor 901.

For the vehicle control method provided in one or more embodiments of this application, refer to the foregoing method embodiments. Details are not described herein again.

An embodiment of this application further provides a vehicle. The vehicle includes the vehicle control apparatus 300, the vehicle control apparatus 800, or the chip 900.

An embodiment of this application further provides a computer-readable storage medium. The computer-readable storage medium stores a computer program or instructions. When the computer program or the instructions are run on a processor, the method shown in the foregoing method embodiments can be implemented.

An embodiment of this application further provides a computer program product. The computer program product includes a computer program or instructions. When the computer program or the instructions are run on a processor, the method shown in the foregoing method embodiments can be implemented.

It should be understood that the memory in embodiments of this application may be a volatile memory or a nonvolatile memory, or may include both a volatile memory and a nonvolatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory described in this specification aims to include but is not limited to these memories and any memory of another proper type.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one unit, or each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A vehicle control apparatus, used in a vehicle, wherein the vehicle control apparatus comprises a processing unit and a control unit, wherein
the processing unit is configured to: generate main control information and a safety escape trajectory based on environment information collected by a sensing apparatus, and send the main control information and the safety escape trajectory to the control unit; and
the control unit is configured to: when the processing unit is normal, control the vehicle based on the main control information; and when the processing unit is abnormal, control the vehicle based on the safety escape trajectory.

2. The apparatus according to claim 1, wherein that the processing unit is abnormal comprises: the processing unit completely fails, or the processing unit partially fails.

3. The apparatus according to claim 2, wherein the control unit is further configured to:
obtain first trajectory correction information based on the environment information collected by the sensing apparatus; and
when the processing unit is abnormal, control the vehicle based on the safety escape trajectory and the first trajectory correction information, wherein the first trajectory correction information is used to correct the safety escape trajectory.

4. The apparatus according to claim 2, wherein
the processing unit is further configured to: when the processing unit partially fails, obtain second trajectory correction information based on the environment information collected by the sensing apparatus, and send the second trajectory correction information to the control unit; and
the control unit is further configured to control the vehicle based on the safety escape trajectory and the second trajectory correction information, wherein the second trajectory correction information is used to correct the safety escape trajectory.

5. The apparatus according to claim 2, wherein
the control unit is further configured to obtain first trajectory correction information based on the environment information collected by the sensing apparatus;
the processing unit is further configured to: when the processing unit partially fails, obtain second trajectory correction information based on the environment information collected by the sensing apparatus, and send the second trajectory correction information to the control unit; and
the control unit is further configured to control the vehicle based on the safety escape trajectory, the first trajectory correction information, and the second trajectory correction information, wherein the first trajectory correction information and the second trajectory correction information are used to correct the safety escape trajectory.

6. The apparatus according to any one of claims 3 to 5, wherein the first trajectory correction information comprises obstacle information and/or spatial perception information; and/or the second trajectory correction information comprises an environment perception result.

7. The apparatus according to any one of claims 1 to 6, wherein the safety escape trajectory comprises: a first safety escape trajectory and/or a second safety escape trajectory, wherein the first safety escape trajectory indicates the vehicle to stop in a current lane, and the second safety escape trajectory indicates the vehicle to pull over to a roadside; and
when the safety escape trajectory comprises the first safety escape trajectory and the second safety escape trajectory, the control unit is further configured to select a target escape trajectory from the first safety escape trajectory and the second safety escape trajectory.

8. The apparatus according to claim 7, wherein the processing unit is further configured to:
predict next-moment environment information based on current environment information, determine a first parking location based on the next-moment environment information, and perform trajectory planning to obtain the first safety escape trajectory, wherein the first parking location is a location, in the current lane, at which there is no obstacle and at which the vehicle can arrive within first duration; and/or
predict next-moment environment information based on current environment information, determine a second parking location based on the next-moment environment information, and perform trajectory planning to obtain the second safety escape trajectory, wherein the second parking location is a location, at the roadside, at which there is no obstacle and at which the vehicle can arrive within second duration.

9. The apparatus according to claim 7 or 8, wherein when selecting the target escape trajectory from the first safety escape trajectory and the second safety escape trajectory, the control unit is configured to: preferentially control, based on the second safety escape trajectory, the vehicle to pull over to the roadside, and predict pull-over duration; and when it is predicted that the pull-over duration exceeds second duration, control the vehicle to stop in the current lane.

10. The apparatus according to any one of claims 1 to 9, wherein
the control unit is further configured to: when the main control information sent by the processing unit is not received within a first time threshold, determine that the processing unit is abnormal; or
the processing unit is further configured to report health information to the control unit, and the control unit is further configured to: when the health information comprises abnormal information, determine that the processing unit is abnormal; or
the control unit is further configured to send first information to the processing unit, the processing unit is further configured to send, to the control unit, second information in response to the first information, and the control unit is further configured to: when the second information is not received within a second time threshold, determine that the processing unit is abnormal.

11. A vehicle, comprising the vehicle control apparatus according to any one of claims 1 to 10.
